# EUROPÄISCHE PATENTSCHRIFT

(11) **EP 3 451 101 B1**
(45) Veröffentlichungstag und Bekanntmachung des Hinweises auf die Patenterteilung: **20.04.2022**
(21) Anmeldenummer: 17189448.8
(22) Anmeldetag: 05.09.2017
(51) Int. Cl.: G05B 23/02

(54) **VERFAHREN ZUM BESTIMMEN EINER FEHLERURSACHE EINES FEHLERS IN EINER FAHRZEUGKOMPONENTE**
METHOD FOR DETERMINING A CAUSE OF A MALFUNCTION IN A VEHICLE COMPONENT
PROCÉDÉ DE DÉTERMINATION D'UNE CAUSE D'UN MAUVAIS FONCTIONNEMENT DANS UN COMPOSANT DE VÉHICULE

(43) Veröffentlichungstag der Anmeldung: 06.03.2019
(73) Patentinhaber: Lisa Dräxlmaier GmbH, 84137 Vilsbiburg (DE)
(72) Erfinder: Heise, Jan Torben, 80939 München (DE)

(56) Entgegenhaltungen:
- US-A1- 2013 159 240
- US-A1- 2017 132 851

## Beschreibung

### Technisches Gebiet

Die vorliegende Erfindung betrifft ein Verfahren, ein Computerprogramm, ein computerlesbares Medium und eine Vorrichtung zum Bestimmen einer Fehlerursache eines Fehlers in einer Fahrzeugkomponente, wie etwa einer wiederaufladbaren Batterie.

### Stand der Technik

Moderne Fahrzeuge enthalten komplexe elektrische, elektromechanische und elektronische Systeme, die im Betrieb eine Vielzahl an Fehlermeldungen abgeben. Tritt ein Fehler in einer Fahrzeugkomponente auf, der zu einer Funktionsstörung des Fahrzeugs führt, können diese Fehlermeldungen zum Ermitteln der Fehlerursache herangezogen werden.

Bei Einbaukomponenten, die von einem Zulieferer dem Fahrzeughersteller bereitgestellt werden, erhält der Zulieferer zur Fehleranalyse in der Regel nur die Fehlermeldungen aus der betroffenen Einbaukomponente. Normalerweise bewertet und sortiert eine Person, ein sogenannter Fehlermanager, die Fehlermeldung nach Kritikalität, Plausibilität und Funktion, um den Fehler zu analysieren und eine Fehlerursache zu finden.

Maschinenlernmodelle werden beispielsweise in "https://en.wikipedia.org/wiki/Machine_learning" näher beschrieben. Informationen über spezielle Maschinenlernmodelle wie neuronale Netzwerke und Entscheidungsbaummodelle sind in "https://en.wikipedia.org/wiki/Artificial_neural_network" und "https://en.wikipedia.org/wiki/Decision_tree_learning" zu finden.

Die US 2013/159240 A1 beschäftigt sich mit einem Verfahren zur Ursachenanalyse von Systemfehlern bei Fahrzeugen. Aus historischen Felddaten kann ein Erstniveaumodell und ein Zweitniveaumodell erzeugt werden. Diese Modelle können jeweils kausale Gewichte bzw. Wahrscheinlichkeiten für einen Fehlercode und Wahrscheinlichkeitsbeziehungen umfassen. Weiter können die Modelle zu einem graphischen Modell kombiniert werden.

Die US 2017/132851 A1 beschreibt ein Verfahren und eine Einrichtung, um die Wartung von Flugzeugen zu unterstützen. Fehlerursachen können automatisch basierend auf einem Modell ermittelt werden.

### Beschreibung der Erfindung

Eine Aufgabe der Erfindung ist, Fehlerursachen für einen Fehler in einer Fahrzeugkomponente standardisierter, schneller und effizienter zu finden.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Ein Aspekt der Erfindung betrifft ein Verfahren zum Bestimmen einer Fehlerursache eines Fehlers in einer Fahrzeugkomponente. Unter einer Fahrzeugkomponente kann im Allgemeinen eine Baugruppe verstanden werden, die auch die elektronische Steuerung der Baugruppe umfassen kann. Im Folgenden wird beispielhaft eine wiederaufladbare Fahrzeugbatterie als Fahrzeugkomponente beschrieben. Es ist aber zu verstehen, dass das Verfahren auch mit anderen Fahrzeugkomponenten durchgeführt werden kann. Ein Fahrzeug kann ein Straßenfahrzeug, wie etwa ein Pkw, Lkw, Bus oder Motorrad, sein. Insbesondere kann ein Fahrzeug ein Elektrofahrzeug oder Hybridfahrzeug sein, das beispielsweise die Fahrzeugbatterie als Energiespeicher zu dessen Antrieb umfasst.

Ein Fehler in einer Fahrzeugkomponente kann jedes Ereignis sein, das dazu führt, dass die Fahrzeugkomponente nicht mehr korrekt arbeitet. Beispielsweise kann ein Fehler sein, dass eine Fahrzeugbatterie weniger Leistung abgibt, als nominal möglich wäre. Die Fehlerursache wiederum kann der Grund für den Fehler sein, wie etwa, dass die Batterie eine zu niedrige Temperatur aufweist, dass Zellen der Batterie ausgefallen sind oder dass ein zur Batterie führendes Kabel sich gelöst hat.

Das Verfahren umfasst: Empfangen von mindestens einem Zustandscode, der von der Fahrzeugkomponente abgegeben wurde, und einer textuellen Fehlerbeschreibung, die zu dem Fehler verfasst wurde; Bestimmen von ersten Modell-Wahrscheinlichkeiten für Fehlerursachen des Fehlers mit einem ersten Maschinenlernmodell aus dem Zustandscode; Bestimmen von zweiten Modell-Wahrscheinlichkeiten für Fehlerursachen des Fehlers mit einem zweiten Maschinenlernmodell aus der textuellen Fehlerbeschreibung; und Erzeugen von End-Wahrscheinlichkeiten für Fehlerursachen aus den ersten und den zweiten Modell-Wahrscheinlichkeiten. Als wahrscheinlichste Fehlerursache kann dann die Fehlerursache mit der höchsten End-Wahrscheinlichkeit ausgewählt werden.

Mit dem Verfahren können einer oder mehrere Zustandscodes und eine textuelle Beschreibung des Fehlers getrennt voneinander mit zwei Maschinenlernmodellen ausgewertet werden, um Wahrscheinlichkeiten für Fehlerursachen zu ermitteln. Diese Wahrscheinlichkeiten können dann je Fehlerursache zusammengefasst werden, um eine End-Wahrscheinlichkeit zu erhalten. Aufgrund einer Fehlerbeschreibung, beispielsweise von einem Kunden bzw. Fahrzeuglenker, und den mitgelieferten Messdaten kann eine Fehlerursache durch ein automatisiertes Verfahren gefunden werden.

Ein Zustandscode kann ein alphanumerischer Code sein, der basierend auf Messwerten in der Fahrzeugkomponente erzeugt wurde. Beispielsweise kann eine Steuerung diese Zustandscodes aus empfangenen Messwerten erzeugen. Ein Zustandscode kann ein Fehlercode sein. Ein Zustandscode kann auch Messwerte umfassen bzw. ein Messwert sein. Ein Zustandscode kann zusätzlich einen Zeitwert umfassen, zu dem der Zustandscode erzeugt wurde.

Eine Fehlerursache kann einen alphanumerischen Code und/oder eine textuelle Beschreibung der Fehlerursache umfassen.

Ein Maschinenlernmodell umfasst einen Algorithmus, der basierend auf Eingaben bzw. Eingabewerten, hier den Zustandscodes, Ausgaben bzw. Ausgabewerte, hier die Fehlerursachen optional zusammen mit Wahrscheinlichkeiten für die Fehlerursachen, erzeugt. Diese Wahrscheinlichkeiten können dann als Modell-Wahrscheinlichkeiten verwendet werden. Es ist zu verstehen, dass ich im Falle dessen, dass eine Modell-Wahrscheinlichkeit für eine Fehlerursache zu 100% bestimmt wird, auch in diesem Fall mehrere Modell-Wahrscheinlichkeiten bestimmt werden, da dann für anderen Fehlerursachen Modell-Wahrscheinlichkeiten von 0% bestimmt wurden.

Das Maschinenlernmodell umfasst weiter Modelldaten, die dazu verwendet werden, aus den Eingaben die Ausgaben zu erzeugen. Diese Modelldaten können durch Trainieren des Maschinenlernmodells erzeugt werden. Das Trainieren kann dabei dadurch erfolgen, dass dem Maschinenlernmodell Eingaben zusammen mit passenden Ausgaben präsentiert werden, die dann zum Erzeugen der Modelldaten verwendet werden.

Insbesondere können die von einer Person, d.h. einem Fehlermanager, erzeugten Daten zum Trainieren des Maschinenlernmodells verwendet werden.

Das erste Maschinenlernmodell ermittelt basierend auf den automatisch erzeugten Zustandscodes erste mögliche Fehlerursachen. Die Eingabewerte des zugehörigen ersten Algorithmus sind die Zustandscodes. Die Ausgabewerte umfassen die ersten Modell-Wahrscheinlichkeiten und/oder erste Fehlerursachen.

Das zweite Maschinenlernmodell ermittelt basierend auf der textuellen Beschreibung zweite mögliche Fehlerursachen. Die Eingabewerte des zugehörigen zweiten Algorithmus sind dabei die textuelle Beschreibung oder Textbausteine der textuellen Beschreibung. Es ist möglich, dass die textuelle Beschreibung, bevor sie dem Algorithmus zugeführt wird, in Textbausteine zerlegt wird. Die Ausgabewerte des zweiten Algorithmus umfassen die zweiten Modell-Wahrscheinlichkeiten und/oder zweiten Fehlerursachen. Es ist zu verstehen, dass die ersten und die zweiten Fehlerursachen durch die gleichen Codes dargestellt werden können.

Zu den möglichen Fehlerursachen ist je Maschinenlernmodell eine Modell-Wahrscheinlichkeit vorhanden. Die Modell-Wahrscheinlichkeiten je Fehlerursachen können am Ende zu einer End-Wahrscheinlichkeit zusammengefasst werden, beispielsweise durch Multiplizieren oder Mittelwertbildung.

Eines der Maschinenlernmodelle ist ein automatisch trainiertes Lernmodell, das Zustandscodes als Eingaben und das mögliche Fehlerursachen als Ausgaben umfasst. Es kann ein Maschinenlernmodell automatisch durch Bereitstellen entsprechender Eingaben und Ausgaben trainiert werden. Durch dieses Training können Modelldaten erzeugt werden, die dann beim Erzeugen von Ausgaben aus Eingaben verwendet werden. Ein solches Maschinenlernmodell kann auch als überwachtes Lernmodell bezeichnet werden.

Eine Modell-Wahrscheinlichkeit für eine Fehlerursache basiert auf einer Wahrscheinlichkeit, die von einem Algorithmus des betreffenden Maschinenlernmodells erzeugt wird. Mit anderen Worten kann die Modell-Wahrscheinlichkeit eine Ausgabe des Algorithmus sein bzw. auf einer derartigen Ausgabe basieren.

Das zweite Maschinenlernmodell basiert auf einem neuronalen Netzwerk. Die Zustandscodes können als Eingabewerte von Eingabeknoten des neuronalen Netzwerks verwendet werden. Die Fehlerursachen können Ausgabeknoten zugeordnet werden. Diese Knoten können insbesondere die Wahrscheinlichkeit der jeweiligen Fehlerursache ausgeben. Die Modelldaten des zweiten Maschinenlernmodells können die Verbindungen und/oder Gewichte zwischen Knoten des neuronalen Netzwerks, das auch Zwischenknoten umfassen kann, umfassen.

Es hat sich ergeben, dass im Rahmen des Verfahrens das Klassifizieren von Zustandscodes mit einem Entscheidungsbaum und das Klassifizieren von Bestandteilen der textuellen Beschreibung mit einem neuronalen Netzwerk zu besonders guten Ergebnissen führen.

Das Verfahren umfasst weiter: Zerlegung der textuellen Beschreibung in Textbausteine; und Eingabe der Textbausteine in das zweite Maschinenlernmodell. Beispielsweise kann die textuelle Beschreibung mit einer vorgefertigten Liste von Schlüsselworten verglichen werden, um zu prüfen, ob das jeweilige Schlüsselwort vorhanden ist. Diese Schlussworte können die Eingaben des Algorithmus sein.

Gemäß einer Ausführungsform der Erfindung werden Modell-Wahrscheinlichkeiten beim Erzeugen der End-Wahrscheinlichkeiten unterschiedlich gewichtet. Es ist aber auch möglich, dass die Modell-Wahrscheinlichkeiten gleich gewichtet werden.

Weiter ist es möglich, dass semantische Bestandteile aus der textuellen Beschreibung in Textbausteine umgewandelt werden. Solche Bestandteile können Ortsangaben, Zeitangaben und/oder Angaben zum Zustand des Fahrzeugs sein.

Gemäß einer Ausführungsform der Erfindung umfasst das erste Maschinenlernmodell ein Entscheidungsbaum-Modell. Das erste Maschinenlernmodell kann als Modelldaten einen Entscheidungsbaum umfassen, dessen Gewichte bestimmen, welchem Ast basierend auf bestimmten Zustandscodes zu den Blättern des Baumes gefolgt werden soll. Die Blätter des Baumes können mit Fehlerursachen als Ausgaben des Maschinenlernmodells verknüpft sein.

Gemäß einer Ausführungsform der Erfindung bestimmt das erste Maschinenlernmodell die ersten Modell-Wahrscheinlichkeiten aus dem mindestens einen Zustandscode und zusätzlich wenigstens einem Umgebungsparameter der Fahrzeugkomponente, der während des Fehlers aufgetreten ist. Das erste Maschinenlernmodell kann ein mehrdimensionales Maschinenlernmodell sein, das neben dem oder den Zustandscodes auch einen oder mehrere Umgebungsparameter als Eingabewerte empfangen kann. Wie weiter unten erläutert wird, können der oder die Umgebungsparameter aus der textuellen Beschreibung ermittelt werden und/oder aus anderen Quellen stammen.

Gemäß einer Ausführungsform der Erfindung umfasst das Verfahren weiter: Bestimmen von dritten Modell-Wahrscheinlichkeiten für Fehlerursachen des Fehlers mit einem dritten Maschinenlernmodell aus wenigstens einem Umgebungsparameter der Fahrzeugkomponente, der während des Fehlers aufgetreten ist; und Erzeugen der End-Wahrscheinlichkeiten für Fehlerursachen aus den ersten, zweiten und dritten Modell-Wahrscheinlichkeiten.

Das erste und/oder das dritte Maschinenlernmodell können basierend auf dem oder den Umgebungsparametern mögliche Fehlerursachen ermitteln. Die zusätzlichen Eingabewerte für den ersten Algorithmus bzw. die Eingabewerte des dritten Algorithmus können einer oder mehrere Umgebungsparameter sein, die beispielsweise aus weiteren Messdaten des Fahrzeugs oder anderer Quellen gewonnen werden können, sein. Diese Umgebungsparameter können beispielsweise die Umgebungstemperatur, die Luftfeuchtigkeit, die Höhenmeter, die Wetterverhältnisse, die Geschwindigkeit des Fahrzeugs usw. codieren. Es ist möglich, dass diese Parameter lediglich Bereiche angeben, so wie etwa "heiß" und "kalt" oder "schnell" und "langsam", "starker Wind" usw.

Die Ausgabewerte des dritten Algorithmus umfassen die dritten Modell-Wahrscheinlichkeiten und/oder dritte Fehlerursachen. Es ist zu verstehen, dass die ersten, zweiten und dritten Fehlerursachen durch die gleichen Codes dargestellt werden können.

Es ist möglich, dass das dritte Maschinenlernmodell schwächere Aussagen erzeugt als die beiden anderen Maschinenlernmodelle. Die Modell-Wahrscheinlichkeiten für die dritten Modell-Wahrscheinlichkeiten können beim Erzeugen der End-Wahrscheinlichkeiten schwächer gewichtet werden. Beispielsweise können das erste und das zweite Maschinenmodell mit 1 und das dritte Maschinenmodell mit 0.5 gewichtet werden.

Es ist auch möglich, dass die dritten Modell-Wahrscheinlichkeiten anstelle der zweiten Modell-Wahrscheinlichkeiten oder zusätzlich zu den zweiten Modell-Wahrscheinlichkeiten bestimmt werden. In diesem Fall können die End-Wahrscheinlichkeiten für Fehlerursachen aus den ersten und dritten Modell-Wahrscheinlichkeiten ermittelt werden.

Gemäß einer Ausführungsform der Erfindung umfasst das Verfahren weiter: Erzeugen von wenigstens einem Umgebungsparameter aus der textuellen Fehlerbeschreibung. Beispielsweise kann die textuelle Fehlerbeschreibung Angaben zu den Umgebungsparametern enthalten. Diese Angaben können mit einem weiteren Algorithmus des dritten Maschinenlernmodells aus der textuellen Beschreibung extrahiert werden. Beispiele für solche Angaben sind "heißes Wetter", "Stop-and-go-Verkehr", "steile Kurve" etc.

Gemäß einer Ausführungsform der Erfindung umfasst das Verfahren weiter: Bestimmen einer Fahrzeugposition und/oder einer Fehlerzeit aus der textuellen Fehlerbeschreibung; Ermitteln von wenigstens einem Umgebungsparameter basierend auf der Fahrzeugposition und/oder der Fehlerzeit. Beispielsweise können Umgebungsparameter, die das Wetter betreffen, mit einer groben Ortsangabe (wie etwa "nördlich von ...") und einer Zeitangabe (wie etwa "mittags") mittels NLP ("natural language processing", "Verarbeitung von natürlicher Sprache") in Werte umgesetzt werden, die von einem Online-Wetterdienst verarbeitet werden können.

Gemäß einer Ausführungsform der Erfindung umfasst das dritte Maschinenlernmodell ein Entscheidungsbaum-Modell. In diesem Fall können die Gewichte des Baums bestimmen, bei welchem oder welchen Umgebungsparametern welchem Ast gefolgt werden soll. Wieder hat sich ergeben, dass im Rahmen des Verfahrens ein derartiges Modell, insbesondere in Kombination mit einem ersten Maschinenlernmodell basierend auf einem Entscheidungsbaum und einem zweiten Maschinenlernmodell basierend auf einem neuronalen Netzwerk, zu guten Ergebnissen führt.

Ein weiterer Aspekt der Erfindung betrifft ein Verfahren zum Trainieren der Maschinenlernmodellen, die zum Bestimmen einer Fehlerursache eines Fehlers in einer Fahrzeugkomponente verwendet werden.

Gemäß einer Ausführungsform der Erfindung umfasst das Trainingsverfahren: Bestimmen einer wirklichen Fehlerursache gemäß dem zuvor beschriebenen Verfahren; Trainieren der ersten, zweiten und/oder dritten Modelldaten des ersten Maschinenlernmodells, des zweiten Maschinenlernmodells und/oder des dritten Maschinenlernmodells basierend auf dem wenigstens einen Zustandscode, der textuellen Fehlerbeschreibung und/oder dem wenigstens einen Umgebungsparameter zusammen mit der wirklichen Fehlerursache. Die wirkliche Fehlerursache kann beispielsweise durch eine Person durch untersuchen der fehlerhaften Komponente ermittelt werden.

Gemäß einer Ausführungsform der Erfindung basiert eine Modell-Wahrscheinlichkeit für eine Fehlerursache auf einer Häufigkeit der Fehlerursache. Es ist aber auch möglich, dass die Modell-Wahrscheinlichkeiten getrennt von dem Algorithmus gespeichert bzw. erzeugt werden. Beispielsweise kann durch das Verfahren eine wahrscheinlichste Fehlerursache bestimmt werden und dann eine Anzahl für diese Fehlerursache um eins erhöht werden. Die Häufigkeit dieser Fehlerursache bestimmt sich dann aus dieser Anzahl geteilt durch die Summe aller Anzahlen aller Fehlerursachen.

Die Modell-Wahrscheinlichkeit kann entweder lediglich die Häufigkeit der zugehörigen Fehlerursache sein oder auf dieser Häufigkeit und einer durch den Algorithmus erzeugten Wahrscheinlichkeit basieren. Beispielsweise können die beiden Wahrscheinlichkeiten multipliziert werden.

Gemäß einer Ausführungsform der Erfindung werden eine oder mehrere Fehlerursachen mit einem Algorithmus des betreffenden Maschinenlernmodells ausgewählt. Es ist auch möglich, dass der Algorithmus lediglich eine Fehlerursache oder eine Mehrzahl von Fehlerursachen als Ausgaben erzeugt. Die Modell-Wahrscheinlichkeit für eine der ausgegebenen Fehlerursachen kann dann die Häufigkeit der jeweiligen Fehlerursache sein.

Ein weiterer Aspekt der Erfindung betrifft eine Vorrichtung zum Bestimmen einer Fehlerursache eines Fehlers in einer Fahrzeugkomponente, das dazu ausgeführt ist, das Verfahren, wie obenstehend und untenstehend beschrieben, durchzuführen. Beispielsweise kann die Vorrichtung ein PC sein.

Gemäß einer Ausführungsform der Erfindung sind eine Einrichtung zum Bestimmen der Modell-Wahrscheinlichkeiten mittels der Maschinenlernmodelle und eine Einrichtung zum Bestimmen der End-Wahrscheinlichkeiten in einer Vorrichtung im Fahrzeug integriert.

Gemäß einer Ausführungsform der Erfindung sind eine Einrichtung zum Bestimmen der Modell-Wahrscheinlichkeiten mittels der Maschinenlernmodelle und eine Einrichtung zum Bestimmen der End-Wahrscheinlichkeiten in einer Vorrichtung in einer online-gestützten Cloud-Umgebung integriert.

Gemäß einer Ausführungsform der Erfindung umfasst die Vorrichtung eine Bewertungseinrichtung, die dazu eingerichtet ist, dass ein Spezialist bzw. eine Person eine Bewertung der End-Wahrscheinlichkeiten durchführt, wobei die Bewertung in die optional online-gestützten Maschinenlernmodelle übertragen wird und diese neu angepasst bzw. trainiert werden.

Weiterer Aspekte der Erfindung betreffen ein Computerprogramm, das, wenn es auf einem Prozessor ausgeführt wird, das Verfahren, wie obenstehend und untenstehend beschrieben, durchführt, und ein computerlesbares Medium, auf dem ein derartiges Computerprogramm gespeichert ist. Ein computerlesbares Medium kann dabei eine Harddisk, ein USB-Speichergerät, ein RAM, ein ROM, ein EPROM oder ein FLASH-Speicher sein. Ein computerlesbares Medium kann auch ein Datenkommunikationsnetzwerk, wie beispielsweise das Internet, das den Download eines Programmcodes ermöglicht, sein.

Es ist zu verstehen, dass Merkmale des Verfahrens, so wie obenstehend und untenstehend beschrieben, auch Merkmale der Vorrichtung, des Computerprogramms und des computerlesbaren Mediums sein können und umgekehrt.

### Kurze Figurenbeschreibung

Nachfolgend wird ein vorteilhaftes Ausführungsbeispiel der Erfindung unter Bezugnahme auf die begleitenden Figuren erläutert. Es zeigen:
Figur 1 zeigt schematisch eine Vorrichtung zum Bestimmen einer Fehlerursache eines Fehlers in einer Fahrzeugkomponente gemäß einer Ausführungsform der Erfindung.
Figur 2 zeigt ein Flussdiagram für ein Verfahren zum Bestimmen einer Fehlerursache eines Fehlers in einer Fahrzeugkomponente gemäß einer Ausführungsform der Erfindung.
Figur 3 zeigt schematisch eine Vorrichtung zum Bestimmen einer Fehlerursache eines Fehlers in einer Fahrzeugkomponente gemäß einer weiteren Ausführungsform der Erfindung.
Fig. 4 zeigt schematisch ein System mit einer Vorrichtung zum Bestimmen einer Fehlerursache eines Fehlers in einer Fahrzeugkomponente gemäß einer weiteren Ausführungsform der Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

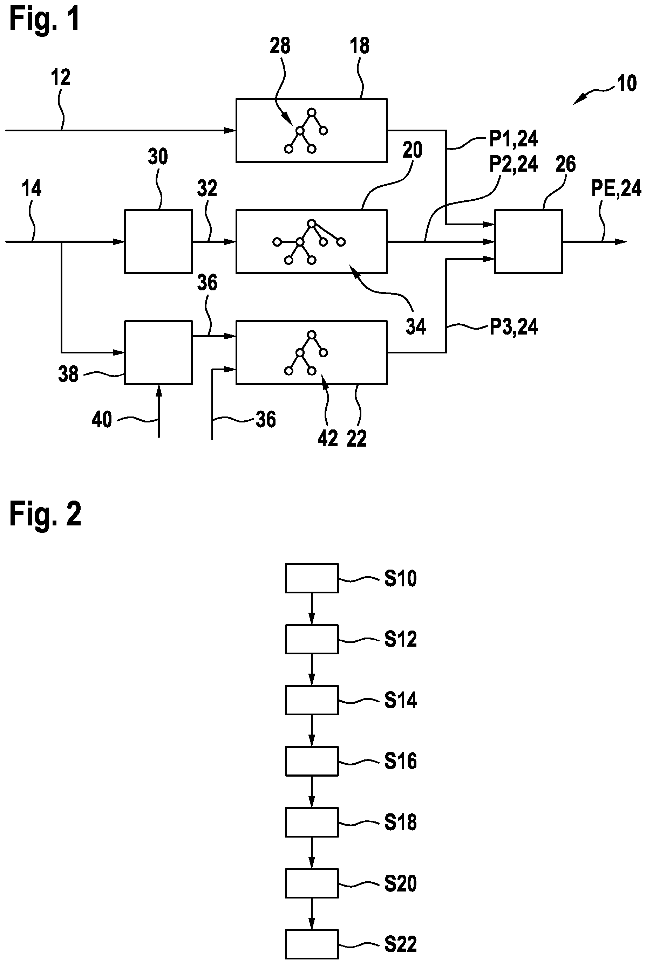

Fig. 1 zeigt eine Vorrichtung 10, das basierend auf einem oder mehreren Zustandscodes 12 und einer textuellen Beschreibung 14 eines Fehlers einer Fahrzeugkomponente eine oder mehrere Fehlerursachen 24 für den Fehler ermittelt.

Die Vorrichtung 10 umfasst drei Maschinenlernmodelle 18, 20, 22, die aus den Zustandscodes 12 und der textuellen Beschreibung zunächst mit Wahrscheinlichkeiten bewertete Fehlerursachen 24 ermitteln, die von einem Bewerter 26 zu der oder den Fehlerursachen 24 verdichtet werden.

Das erste Maschinenlernmodell 18 erhält als Eingabewerte die Zustandscodes 12, die beispielsweise aus dem Fehlerspeicher der Fahrzeugkomponente ausgelesen wurden. Die Zustandscodes 12 können beispielsweise Messdaten von in die Fahrzeugkomponente integrierten Sensoren umfassen. Auch können die Zustandscodes 12 auf Fehlermeldungen basieren, die von einer Steuerung der Fahrzeugkomponente aus diesen Messdaten erzeugt wurden.

Basierend auf Modelldaten 28 werden aus den Zustandscodes 12 durch das Maschinenlernmodell 18 Ausgabewerte in der Form von mit Wahrscheinlichkeiten P1 bewerteten Fehlerursachen 24 erzeugt. Das Maschinenlernmodell 18 kann auf einem Entscheidungsbaum basieren, dessen Struktur und/oder Gewichte die Modelldaten 28 darstellen. Mithilfe des Entscheidungsbaums kann ein Algorithmus des Maschinenlernmodells 18 die Zustandscodes klassifizieren und die möglichen Fehlerursachen 24 ermitteln, die mit den Blättern des Entscheidungsbaums 28 verknüpft sein können.

Die Wahrscheinlichkeit P1 für die jeweilige Fehlerursache 24 kann durch eine Häufigkeit des Auftretens der jeweiligen Fehlerursache bestimmt werden. Dazu kann für jede mögliche Fehlerursache 24 ein Zähler vorgesehen sein, der inkrementiert wird, wenn die jeweilige Fehlerursache 24 durch das Maschinenlernmodell 18 für einen Fehler ermittelt wurde. Die relative Häufigkeit bezüglich aller Fehlerursachen kann dann als Wahrscheinlichkeit für die Fehlerursache verwendet werden.

Die textuelle Beschreibung 14, die durch eine Zeichenfolge repräsentiert sein kann, kann zusammen mit den Zustandscodes 12 zu dem Fehler geliefert werden. Beispielsweise kann ein Fahrzeugfahrer die textuelle Beschreibung liefern, wenn die Zustandscodes aus der fehlerhaften Fahrzeugkomponente ausgelesen werden. Die textuelle Beschreibung 14 kann von einem Parser 30 in Textbausteine 32 zerlegt werden, die dem zweiten Maschinenlernmodell 20 als Eingabewerte zugeführt werden.

Basierend auf zweiten Modelldaten 34 werden aus den Textbausteinen 32 durch das zweite Maschinenlernmodell 20 wieder Ausgabewerte in der Form von mit Wahrscheinlichkeiten P2 bewerteten Fehlerursachen 24 erzeugt. Das Maschinenlernmodell 20 kann auf einem neuronalen Netzwerk 34 basieren, dessen Struktur und/oder Gewichte die Modelldaten 34 darstellen. Mithilfe des neuronalen Netzwerks 34 kann ein Algorithmus des Maschinenlernmodells 20 die Textbausteine 32 klassifizieren und die möglichen Fehlerursachen 24 zusammen mit ihrer Wahrscheinlichkeit P2 ermitteln.

Das dritte Maschinenmodell 22 wird mit Eingabewerten in der Form von Umgebungsparametern 36 versorgt, die entweder zusammen mit den Zustandscodes 12 und der textuellen Beschreibung 14 geliefert werden können. Beispielsweise basieren die Umgebungsparameter aus Messwerten aus dem Fahrzeug, die von Sensoren geliefert wurden, die nicht Teil der fehlerhaften Fahrzeugkomponente sind.

Es ist aber auch möglich, dass die Umgebungsparameter 36 von einem Textauswerter 38 aus der textuellen Beschreibung 14 erzeugt wurden. Dazu kann die textuelle Beschreibung 14 von dem Textauswerter 38 dahingehend analysiert werden, ob in ihr eine sprachliche Beschreibung der jeweiligen Parameter vorhanden ist. Beispielsweise kann die Angabe "Stau" dahingehend ausgewertet werden, dass das Fahrzeug eine niedrige Geschwindigkeit hatte.

Basierend auf dritten Modelldaten 42 werden aus den Umgebungsparametern 36 durch das dritte Maschinenlernmodell 22 Ausgabewerte in der Form von mit Wahrscheinlichkeiten P3 bewerteten Fehlerursachen 24 erzeugt. Wie das Maschinenmodell 18 kann das Maschinenlernmodell 18 auf einem Entscheidungsbaum 42 basieren, dessen Struktur und/oder Gewichte die Modelldaten 42 darstellen. Mithilfe des Entscheidungsbaums 42 kann ein Algorithmus des dritten Maschinenlernmodells 22 die Umgebungsparameter 36 klassifizieren und die möglichen Fehlerursachen 24 ermitteln, die mit den Blättern des Entscheidungsbaums 42 verknüpft sein können. Analog dem Maschinenmodell 22 können die Wahrscheinlichkeiten P3 zu den Fehlerursachen 24 wieder über relative Häufigkeiten ermittelt werden.

Alle Maschinenlernmodelle 18, 20, 22 können mit Eingabewerten und dazu passenden Ausgabewerten trainiert worden sein, die beispielsweise von einer Person geliefert werden können.

Die Modelle 18, 20, 22 und die Komponenten 26, 30, 38 können als Module und/oder Funktionen einer Software implementiert sein.

Die Fig. 2 zeigt ein Flussdiagramm für ein Verfahren zum Bestimmen der Fehlerursache 24, das von der Vorrichtung 10 ausgeführt werden kann.

Im Schritt S10 werden die Zustandscodes 12, die von der Fahrzeugkomponente abgegeben wurden, und einer textuellen Fehlerbeschreibung 14, die zu dem Fehler verfasst wurde, in der Vorrichtung 10 empfangen. Beispielsweise können diese Daten von einer Werkstatt, die die Fahrzeugkomponente untersucht, bereitgestellt werden. Die Zustandscodes 12 können in der Werkstatt ausgelesen werden und die textuelle Beschreibung 14 kann in der Anwendung, die die Zustandscodes 12 ausliest, eingegeben werden. Diese Daten können dann per E-Mail, online oder mit einem Datenträger zu der Vorrichtung 10 transportiert werden. Es ist aber auch möglich, dass die Vorrichtung 10 Bestandteil einer Anwendung ist, die dazu ausgeführt ist, die Zustandscodes 12 und optional weitere Daten aus der Fahrzeugkomponente und/oder dem Fahrzeug auszulesen.

Optional können auch Umgebungsparameter 36 in der Vorrichtung 10 auf die eben geschilderte Art und Weise in der Vorrichtung 10 empfangen werden. Auch diese Umgebungsparameter 36 können mit einer Anwendung aus dem Fahrzeug ausgelesen werden.

Im Folgenden wird das Beispiel behandelt, dass das Fahrzeug ein Elektrofahrzeug ist und dass die Fahrzeugkomponente eine defekte Batterie ist. In diesem Fall können die (beispielhaft vereinfachten) Zustandscodes: "Spannungsbewertung OK", "Temperaturbewertung OK" und "Kapazitätsbewertung nicht OK" sein. Ein weiterer Zustandscode kann beispielsweise sein "Laufleistung > 10.000 h". Die Zustandscodes können mittels alphanumerischer Codes kodiert sein, und müssen nicht, wie eben genannt, für Menschen lesbare Zeichenketten enthalten.

Ein Beispiel für eine textuelle Beschreibung 14 könnte "verzögertes Ansprechverhalten in der Nähe von München bei Tempo 100 km/h um 15 Uhr am Samstag letzte Woche" sein. Die textuelle Beschreibung kann in einer Zeichenkette kodiert sein und/oder kann menschlich lesbaren Text enthalten.

Im Schritt S12 werden mit dem ersten Maschinenlernmodell 18 erste Modell-Wahrscheinlichkeiten P1 für Fehlerursachen 24 des Fehlers aus den Zustandscodes 12 bestimmt. Dazu werden die Zustandscodes 12 dem Maschinenlernmodell 18 als Eingaben bereitgestellt, da basierend auf den Modelldaten 28 eine Liste von möglichen Fehlerursachen 24 und optional zusammen mit deren Modell-Wahrscheinlichkeiten erzeugt. Wie bereits weiter oben beschrieben, kann dazu ein Entscheidungsbaum 28 verwendet werden.

Es ist möglich, dass die Modell-Wahrscheinlichkeiten für die gefundenen Fehlerursachen 24 auf einer relativen Häufigkeit der jeweiligen Fehlerursache 24 basieren. Dazu können in dem ersten Maschinenlernmodell 18 (bzw. global in der Vorrichtung 10) die relativen Häufigkeiten gespeichert sein und können optional auch basierend auf dem Ergebnis jeder Fehlerauswertung aktualisiert werden.

Beispielsweise kann die Liste von Fehlerursachen 24 mit dem Algorithmus des betreffenden Maschinenlernmodells 18, 22 erzeugt werden und die Modell-Wahrscheinlichkeit für die jeweilige Fehlerursache 24 die Häufigkeit der Fehlerursache sein. Beispielsweise könnte der Algorithmus des Maschinenlernmodells 18 zu den möglichen Fehlerursachen 24 auch eine Wahrscheinlichkeit für die Fehlerursache liefern. Die Liste der Fehlerursachen kann dann dadurch erzeugt werden, dass nur Fehlerursachen 24 übernommen werden, deren vom Algorithmus erzeugte Wahrscheinlichkeit größer als ein Schwellwert ist. Die Modell-Wahrscheinlichkeit wird dann als die Häufigkeit der jeweiligen Fehlerursache 24 genommen (und nicht die vom Algorithmus erzeugte Wahrscheinlichkeit).

Im Beispiel der Fahrzeugbatterie könnten mögliche Fehlerursachen 24 "Batterie nicht auf Betriebstemperatur" und "Zellen der Batterie sind ausgefallen" sein. Es ist zu verstehen, dass die Fehlerursachen 24 von dem Maschinenlernmodell 18 (und auch den anderen Maschinenlernmodellen 20, 22) als alphanumerische Codes bereitgestellt werden.

Im Schritt S14 zerlegt der Parser 30 die textuelle Beschreibung 14 in Textbausteine 32. Beispielsweise kann der Parser 30 eine Liste von Schlüsselwörtern enthalten, die in der textuellen Beschreibung 14 vorhanden sein können. Im vorliegenden Beispiel können die gefundenen Schlüsselwörter "verzögert(es)" und "Ansprechverhalten" sein. Die Textbausteine 32 werden dem zweiten Maschinenlernmodell 20 als Eingabe bereitgestellt.

Im Schritt S16 werden zweite Modell-Wahrscheinlichkeiten P2 für Fehlerursachen 24 des Fehlers mit einem zweiten Maschinenlernmodell 20 aus den Textbausteinen 32 bzw. den Schlüsselwörtern erzeugt. Das zweite Maschinenmodell 20 kann auf einem neuronalen Netz 34 basieren, bei dem jeder Eingangsknoten einem Schlüsselwort bzw. einem Textbaustein 32 zugeordnet ist. Dieses neuronale Netz 34 erzeugt dann eine Modell-Wahrscheinlichkeit für jede mögliche Fehlerursache 24, die den Ausgangsknoten des neuronalen Netzes 34 zugeordnet sind.

Im Schritt S18 erzeugt der Textauswerter 38 Umgebungsparameter 36 aus der textuellen Fehlerbeschreibung 14. Der Textauswerter 38 kann die textuelle Beschreibung semantisch zerlegen und bestimmte Umgebungsparameter 36, wie etwa die Fahrzeuggeschwindigkeit oder den Zustand der Straße (wie etwa Kurve, holprig usw.), bestimmen. Im vorliegenden Beispiel kann der Textauswerter an dem Schlüsselwort "Geschwindigkeit" und/oder dem Schlüsselwort "km/h" erkennen, dass "100" wohl die Geschwindigkeit des Fahrzeugs in km/h war. Der Textauswerter 38 könnte daraus den Umgebungsparameter 36 "Geschwindigkeit zwischen 80 km/h und 120 km/h" erzeugen, der als alphanumerischer Code dem Maschinenlernmodell 22 bereitgestellt werden kann.

Der Textauswerter 38 kann auch als spezielle Umgebungsparameter 36 eine Fahrzeugposition und/oder einer Fehlerzeit aus der textuellen Fehlerbeschreibung 14 ermitteln. Im vorliegenden Beispiel können dies "Nähe von München" und "15 Uhr am Samstag letzte Woche" sein. Basierend auf der Fahrzeugposition und/oder der Fehlerzeit kann der Textauswerter 38 dann weitere Umgebungsparameter 36 dadurch ermitteln, dass er die Zeit- und Ortsangaben an einen Wetterdienst weiterleitet und dort Angaben zu Windgeschwindigkeit, Temperatur, Niederschlag usw. als Umgebungsparameter 36 erhält.

Im Schritt S20 werden dritte Modell-Wahrscheinlichkeiten P3 für Fehlerursachen 24 des Fehlers mit einem dritten Maschinenlernmodell 22 aus den durch den Textauswerter 38 bestimmten Umgebungsparametern 36 ermittelt. Es können auch alternativ und/oder zusätzlich Umgebungsparameter 36, die direkt aus dem Fahrzeug stammen, ausgewertet werden. Wie das Maschinenlernmodell 18 kann das Maschinenlernmodell 22 auf einem Entscheidungsbaum 42 basieren und analog eine Liste von möglichen Fehlerursachen 24 erzeugen. Auch die Wahrscheinlichkeiten P3 können aus Häufigkeiten der Fehlerursachen wie bei dem Maschinenlernmodell 18 bestimmt werden.

Im Schritt S22 werden von dem Bewerter 26 End-Wahrscheinlichkeiten PE für Fehlerursachen 24 aus den ersten, zweiten und dritten Modell-Wahrscheinlichkeiten erzeugt. Dazu können die Modell-Wahrscheinlichkeiten für jede Fehlerursache 24 mittels einer Funktion zusammengefasst werden. Beispielsweise können die Modell-Wahrscheinlichkeiten beim Erzeugen der End-Wahrscheinlichkeiten unterschiedlich gewichtet werden. Die Modell-Wahrscheinlichkeiten aus den Modellen 18 und 20 können mit dem Faktor 1 und die Modell-Wahrscheinlichkeit aus dem Modell 22 kann mit dem Faktor 0.5 gewichtet werden. Die End-Wahrscheinlichkeit kann der Mittelwert der optional gewichteten Modell-Wahrscheinlichkeiten sein. Die Fehlerursache 16 mit der höchsten End-Wahrscheinlichkeit kann als wahrscheinlichste Fehlerursache ausgegeben werden.

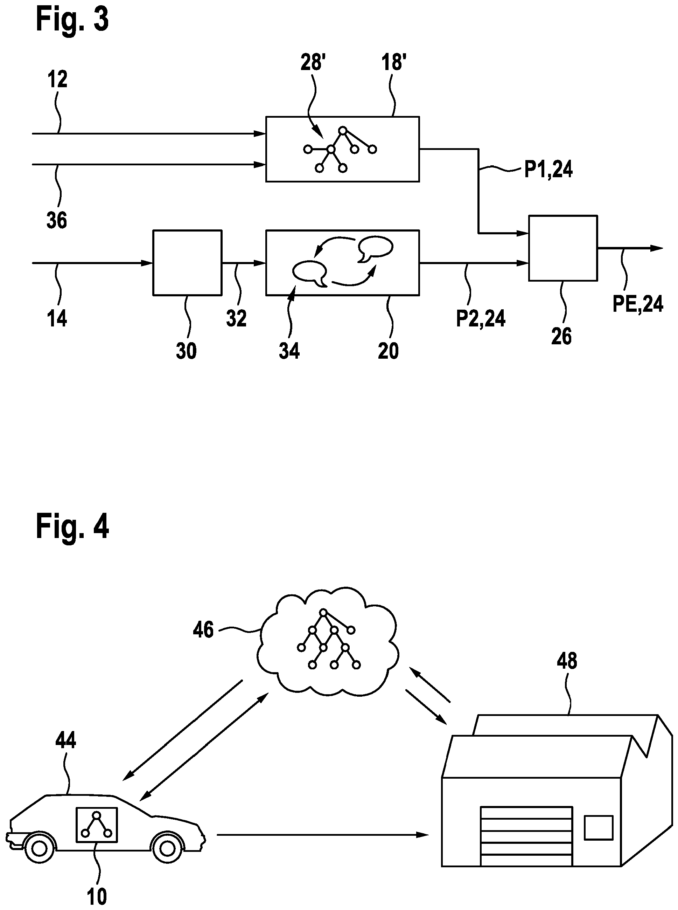

Fig. 3 zeigt schematisch eine Vorrichtung 10 zum Bestimmen einer Fehlerursache eines Fehlers in einer Fahrzeugkomponente gemäß einer weiteren Ausführungsform der Erfindung.

Im Unterschied zu der in Fig. 1 gezeigten Ausführungsform ist ein erstes Maschinenlernmodell 18' dazu in der Lage zusätzlich Umgebungsparameter 36 als Eingabewerte zu verarbeiten. Das Maschinenlernmodell 18' kann als Kombination der Maschinenlernmodelle 18 und 22 aus der Fig. 1 in einem mehrdimensionalen Maschinenlernmodell 18' aufgefasst werden und auch deren Merkmale aufweisen.

Das erste Maschinenlernmodell 18' erhält als Eingabewerte die Zustandscodes 12, die beispielsweise aus dem Fehlerspeicher der Fahrzeugkomponente ausgelesen wurden, und die Umgebungsparameter 36, die beispielsweise aus anderen Fahrzeugkomponenten stammen können. Basierend auf Modelldaten 28' werden aus den Zustandscodes 12 und den Umgebungsparametern 36 durch das Maschinenlernmodell 18' Ausgabewerte in der Form von mit Wahrscheinlichkeiten P1 bewerteten Fehlerursachen 24 erzeugt. Auch das Maschinenlernmodell 18' kann auf einem Entscheidungsbaum basieren, dessen Struktur und/oder Gewichte die Modelldaten 28' darstellen. Mithilfe des Entscheidungsbaums kann ein Algorithmus des Maschinenlernmodells 18' die Zustandscodes 12 und Umgebungsparameter 36 klassifizieren und die möglichen Fehlerursachen 24 ermitteln, die mit den Blättern des Entscheidungsbaums 28 verknüpft sein können.

Es ist zu verstehen dass bei der Ausführungsform der Fig. 3 der Umgebungsparameter 36 auch aus einem Textbewerter 38 und oder einer weiteren Quelle stammen können. Weiter können die Wahrscheinlichkeiten P1 und P2 analog der Fig. 1 ausgewertet werden.

Fig. 4 zeigt ein Fahrzeug 44 mit einer Vorrichtung 10 zum Bestimmen einer Fehlerursache (eines Fehlers in einer Fahrzeugkomponente. Das in der Fig. 4 gezeigte Gesamtsystem umfasst weiterhin eine online-gestützte Cloud-Umgebung 46 sowie ein Werkstatt 48, welche hier stellvertretend für eine Einrichtung zur Bewertung der tatsächlichen Fehlerursache durch einen Spezialisten steht.

Das Verfahren, so wie obenstehend beschrieben, kann in einer online-Variante und in einer offline-Variante umgesetzt werden. In der offline-Variante sind die Maschinenlernmodelle 18, 18', 20, 22 im Fahrzeug 44 integriert und die so bestimmten End-Wahrscheinlichkeiten PE werden im Fahrzeug 44 oder in einem an das Fahrzeug 44 angeschlossenen Diagnosesystem angezeigt. Optional kann die tatsächliche Fehlerursache, die beispielsweise durch den Spezialisten in der Werkstatt 48 bestimmt wurde, an eine Cloud-basierte Lernumgebung ( die Teil der online-gestützte Cloud-Umgebung 46 sein kann) weitergeleitet, um die Maschinenlernmodelle 18, 18', 2ß0, 22 zu verbessern (Training bzw. Fitting).

In der online-Variante sind die Maschinenlernmodelle 18, 18' 20, 22 in die online-gestützte Cloud-Umgebung 46 integriert. Der zumindest eine Zustandscode 12 einer Fahrzeugkomponente und eine textuelle Fehlerbeschreibung und ergänzend oder alternativ mindestens ein Umgebungsparameter 36 werden an die online-gestützte Cloud-Umgebung 46 übertragen und in dieser die End-Wahrscheinlichkeiten PE für die Fehlerursachen 24 bestimmt. Die End-Wahrscheinlichkeiten PE für die Fehlerursachen 24 werden dann zurück an das Fahrzeug 44 und/oder an ein zum Fahrzeug 44 externes Diagnosesystem (beispielsweise in der Werkstatt 48 oder einem Service-Fahrzeug) übertragen. Die bereits für die offline-Variante beschriebene Bewertung der tatsächlichen Fehlerursache durch einen Spezialisten und Rückkopplung an die online-gestützte Cloud-Umgebung 46 zum Verbessern der Maschinenlernmodelle 18, 18', 20, 22 kann analog zur offline-Variante erfolgen, mit dem Unterschied, dass ein oder mehrere verbesserte Maschinenlernmodelle 18, 18', 20, 22 nicht zurück an das Fahrzeug 44 übertragen werden müssen, sondern dass die Cloud-basierte Lernumgebung den produktiven Maschinenlernmodellen entspricht.

Da es sich bei den vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft.

### BEZUGSZEICHENLISTE

- 10: Vorrichtung
- 12: Zustandscode
- 14: textuelle Beschreibung
- 18: erstes Maschinenlernmodell
- 20: zweites Maschinenlernmodell
- 22: drittes Maschinenlernmodell
- 24: Fehlerursache
- P1: erste Wahrscheinlichkeiten
- P2: zweite Wahrscheinlichkeiten
- P3: dritte Wahrscheinlichkeiten
- PE: End-Wahrscheinlichkeiten
- 26: Bewerter
- 28: erste Modelldaten / Entscheidungsbaum
- 30: Parser
- 32: Textbausteine
- 34: zweite Modelldaten / neuronales Netzwerk
- 36: Umgebungsparameter
- 38: Textauswerter
- 40: externe Daten
- 42: dritte Modelldaten
- 18': alternatives erstes Maschinenmodell
- 28': alternative erste Modelldaten / alternativer Entscheidungsbaum
- 44: Fahrzeug
- 46: Cloud-Umgebung
- 48: Werkstatt

## Patentansprüche

1. Verfahren zum Bestimmen einer Fehlerursache (24) eines Fehlers in einer Fahrzeugkomponente, das Verfahren umfassend:
Empfangen von mindestens einem Zustandscode (12), der von der Fahrzeugkomponente abgegeben wurde, und einer textuellen Fehlerbeschreibung (14), die zu dem Fehler verfasst wurde;
Bestimmen von ersten Modell-Wahrscheinlichkeiten (P1) für Fehlerursachen (24) des Fehlers mit einem ersten Maschinenlernmodell (18, 18') aus dem mindestens einen Zustandscode (12);
Bestimmen von zweiten Modell-Wahrscheinlichkeiten (P2) für Fehlerursachen (24) des Fehlers mit einem zweiten Maschinenlernmodell (20), das auf einem neuronalen Netzwerk (34) basiert, aus der textuellen Fehlerbeschreibung (14), wobei die textuelle Fehlerbeschreibung (14) in Textbausteine (32) zerlegt wird und die Textbausteine (32) in das zweite Maschinenlernmodell (20) eingeben werden;
Erzeugen von End-Wahrscheinlichkeiten (PE) für Fehlerursachen (24) aus den ersten und den zweiten Modell-Wahrscheinlichkeiten;
wobei das erste und
das zweite Maschinenlernmodell (18, 18', 20) ein automatisch trainiertes Lernmodell ist, bei dem Modelldaten durch Trainieren des Maschinenlernmodells erzeugt werden und das die möglichen Fehlerursachen (24) und die ersten bzw. zweiten Modell-Wahrscheinlichkeiten (P1, P2) als Ausgaben umfasst, wobei die Modell-Wahrscheinlichkeit (P1, P2) für eine Fehlerursache (24) auf einer Wahrscheinlichkeit basiert, die von einem Algorithmus des betreffenden Maschinenlernmodells (18, 18', 20) aus den Modelldaten erzeugt wird.

2. Verfahren nach Anspruch 1,
wobei Modell-Wahrscheinlichkeiten (P1, P2, P3) beim Erzeugen der End-Wahrscheinlichkeiten (PE) unterschiedlich gewichtet werden.

3. Verfahren nach einem der vorhergehenden Ansprüche.
wobei das erste Maschinenlernmodell (18) auf einem Entscheidungsbaum (28) basiert.

4. Verfahren nach einem der vorangegangenen Ansprüche,
wobei das erste Maschinenlernmodell (18') die ersten Modell-Wahrscheinlichkeiten (P1) aus dem mindestens einen Zustandscode (12) und wenigstens einem Umgebungsparameter (36) der Fahrzeugkomponente, der während des Fehlers aufgetreten ist, bestimmt.

5. Verfahren nach einem der vorhergehenden Ansprüche, weiter umfassend:
Bestimmen von dritten Modell-Wahrscheinlichkeiten (P3) für Fehlerursachen (24) des Fehlers mit einem dritten Maschinenlernmodell (22) aus wenigstens einem Umgebungsparameter (36) der Fahrzeugkomponente, der während des Fehlers aufgetreten ist, wobei die dritten Modell-Wahrscheinlichkeiten (P3) anstelle der zweiten Modell-Wahrscheinlichkeiten (P2) oder zusätzlich zu den zweiten Modell-Wahrscheinlichkeiten (P2) bestimmt werden;
Erzeugen der End-Wahrscheinlichkeiten (PE) für Fehlerursachen (24) aus den ersten und dritten oder alternativ aus den ersten, zweiten und dritten Modell-Wahrscheinlichkeiten (P1, P2, P3).

6. Verfahren nach Anspruch 4 oder 5, weiter umfassend:
Erzeugen von zumindest einem Umgebungsparameter (36) aus der textuellen Fehlerbeschreibung (14).

7. Verfahren nach einem der Ansprüche 4 bis 6, weiter umfassend:
Bestimmen einer Fahrzeugposition und/oder einer Fehlerzeit aus der textuellen Fehlerbeschreibung (14);
Ermitteln von zumindest einem Umgebungsparameter (36) basierend auf der Fahrzeugposition und/oder der Fehlerzeit.

8. Verfahren nach einem der Ansprüche 4 bis 7,
wobei das dritte Maschinenlernmodell (22) auf einem Entscheidungsbaum (42) basiert.

9. Verfahren zum Trainieren von Maschinenlernmodellen (18, 18', 20, 22) zum Bestimmen einer Fehlerursache (24) eines Fehlers in einer Fahrzeugkomponente, das Verfahren umfassend:
Bestimmen einer Fehlerursache (24) mit dem Verfahren nach einem der vorhergehenden Ansprüche;
Bestimmen einer wirklichen Fehlerursache (24);
Trainieren von Modelldaten (28, 34, 42) des ersten Maschinenlernmodells (18, 18'), des zweiten Maschinenlernmodells (20) und/oder eines dritten Maschinenlernmodells (22) basierend auf dem wenigstens einen Zustandscode (12), der textuellen Fehlerbeschreibung (14) und/oder wenigstens einem Umgebungsparameter (36) und der wirklichen Fehlerursache (24).

10. Verfahren nach Anspruch 9,
wobei eine Modell-Wahrscheinlichkeit (P1, P2, P3) für eine Fehlerursache (24) auf einer Häufigkeit der Fehlerursache (24) basiert.

11. Verfahren nach Anspruch 10,
wobei eine oder mehrere Fehlerursachen (24) mit einem Algorithmus des betreffenden Maschinenlernmodells (18, 18', 22) ausgewählt werden und die Modell-Wahrscheinlichkeit (P1, P2, P3) für die Fehlerursache (24) die Häufigkeit der Fehlerursache ist.

12. Vorrichtung (10) zum Bestimmen einer Fehlerursache (24) eines Fehlers in einer Fahrzeugkomponente,
wobei die Vorrichtung (10) dazu ausgeführt ist, das Verfahren nach einem der Ansprüche 1-8 durchzuführen.

13. Vorrichtung (10) nach dem vorangegangenen Anspruch,
wobei eine Einrichtung zum Bestimmen der Modell-Wahrscheinlichkeiten (P1, P2, P3) mittels der Maschinenlernmodelle (18, 18', 20, 22) und eine Einrichtung zum Bestimmen der End-Wahrscheinlichkeiten (PE) in einer Vorrichtung (10) im Fahrzeug (44) integriert sind.

14. Vorrichtung (10) nach einem der beiden vorangegangenen Ansprüche,
wobei eine Einrichtung zum Bestimmen der Modell-Wahrscheinlichkeiten (P1, P2, P3) mittels der Maschinenlernmodelle (18, 18', 20, 22) und eine Einrichtung zum Bestimmen der End-Wahrscheinlichkeiten (PE) in einer Vorrichtung (10) in einer online-gestützten Cloud-Umgebung (46) integriert sind.

15. Vorrichtung nach einem der drei vorangegangenen Ansprüche, mit einer Bewertungseinrichtung (48), die dazu eingerichtet ist, dass ein Spezialist eine Bewertung der End-Wahrscheinlichkeiten (PE) durchführt, wobei die Bewertung in die Maschinenlernmodelle übertragen wird und diese neu angepasst werden.

16. Computerprogramm, das, wenn es auf einem Prozessor ausgeführt wird, das Verfahren nach einem der Ansprüche 1 bis 11 durchführt.

17. Computerlesbares Medium, auf dem ein Computerprogramm nach dem vorangegangenen Anspruch gespeichert ist.

## Claims

1. Method for determining a fault cause (24) for a fault in a vehicle component, the method comprising:
receiving at least one state code (12), which was delivered by the vehicle component, and a textual fault description (14), which was written for the fault;
determining first model probabilities (P1) for fault causes (24) of the fault from the at least one state code (12) by using a first machine learning model (18, 18');
determining second model probabilities (P2) for fault causes (24) of the fault from the textual fault description (14) by using a second machine learning model (20), which is based on a neural network (34), wherein the textual fault description (14) is broken down into text blocks (32) and the text blocks (32) are input into the second machine learning model (20); generating final probabilities (PE) for fault causes (24) from the first and the second model probabilities; wherein the first and the second machine learning model (18, 18', 20) are an automatically trained learning model for which model data are generated by training the machine learning model and that comprises the possible fault causes (24) and the first and second model probabilities (P1, P2) as outputs, the model probability (P1, P2) for a fault cause (24) being based on a probability that is generated from the model data by an algorithm of the relevant machine learning model (18, 18', 20).

2. Method according to Claim 1,
wherein model probabilities (P1, P2, P3) are weighted differently when the final probabilities (PE) are generated.

3. Method according to either of the preceding claims,
wherein the first machine learning model (18) is based on a decision tree (28).

4. Method according to one of the preceding claims, wherein the first machine learning model (18') determines the first model probabilities (P1) from the at least one state code (12) and at least one environmental parameter (36) of the vehicle component that has occurred during the fault.

5. Method according to one of the preceding claims, further comprising:
determining third model probabilities (P3) for fault causes (24) of the fault from at least one environmental parameter (36) of the vehicle component that has occurred during the fault by using a third machine learning model (22), the third model probabilities (P3) being determined instead of the second model probabilities (P2) or in addition to the second model probabilities (P2);
generating the final probabilities (PE) for fault causes (24) from the first and third or alternatively from the first, second and third model probabilities (P1, P2, P3).

6. Method according to Claim 4 or 5, further comprising:
generating at least one environmental parameter (36) from the textual fault description (14).

7. Method according to one of Claims 4 to 6, further comprising:
determining a vehicle position and/or a fault time from the textual fault description (14);
ascertaining at least one environmental parameter (36) on the basis of the vehicle position and/or the fault time.

8. Method according to one of Claims 4 to 7,
wherein the third machine learning model (22) is based on a decision tree (42).

9. Method for training machine learning models (18, 18', 20, 22) for determining a fault cause (24) for a fault in a vehicle component, the method comprising:
determining a fault cause (24) by using the method according to one of the preceding claims;
determining an actual fault cause (24);
training model data (28, 34, 42) of the first machine learning model (18, 18'), of the second machine learning model (20) and/or of a third machine learning model (22) on the basis of the at least one state code (12), the textual fault description (14) and/or at least one environmental parameter (36) and the actual fault cause (24).

10. Method according to Claim 9,
wherein a model probability (P1, P2, P3) for a fault cause (24) is based on a frequency of the fault cause (24) .

11. Method according to Claim 10,
wherein one or more fault causes (24) are selected using an algorithm of the relevant machine learning model (18, 18', 22), and the model probability (P1, P2, P3) for the fault cause (24) is the frequency of the fault cause.

12. Apparatus (10) for determining a fault cause (24) for a fault in a vehicle component,
wherein the apparatus (10) is designed to perform the method according to one of Claims 1-8.

13. Apparatus (10) according to the preceding claim, wherein a device for determining the model probabilities (P1, P2, P3) by means of the machine learning models (18, 18', 20, 22) and a device for determining the final probabilities (PE) in an apparatus (10) are integrated in the vehicle (44).

14. Apparatus (10) according to either of the two preceding claims,
wherein a device for determining the model probabilities (P1, P2, P3) by means of the machine models (18, 18', 20, 22) and a device for determining the final probabilities (PE) in an apparatus (10) are integrated in an online-supported cloud environment (46) .

15. Apparatus according to one of the three preceding claims, having a rating device (48) configured for a specialist to perform a rating of the final probabilities (PE), the rating being transferred to the machine learning models and these being readjusted.

16. Computer program that, when executed on a processor, performs the method according to one of Claims 1 to 11.

17. Computer-readable medium on which a computer program according to the preceding claim is stored.

## Revendications

1. Procédé de détermination d'une cause de défaut (24) d'un défaut dans un composant de véhicule, le procédé comprenant :
réception d'au moins un code d'état (12), qui a été délivré par le composant de véhicule, et d'une description de défaut (14) textuelle qui a été rédigée à propos du défaut ;
détermination de premières probabilités de modèle (P1) pour les causes de défaut (24) du défaut avec un premier modèle d'apprentissage automatique (18, 18') à partir de l'au moins un code d'état (12) ;
détermination de deuxièmes probabilités de modèle (P2) pour les causes de défaut (24) du défaut avec un deuxième modèle d'apprentissage automatique (20), qui se base sur un réseau neuronal (34), à partir de la description de défaut (14) textuelle, la description de défaut (14) textuelle étant décomposée en blocs de texte (32) et les blocs de texte (32) étant entrés dans le deuxième modèle d'apprentissage automatique (20) ;
génération de probabilités finales (PE) pour les causes de défaut (24) à partir des premières et des deuxièmes probabilités de modèle ;
le premier et le deuxième modèle d'apprentissage automatique (18, 18', 20) étant un modèle d'apprentissage à entraînement automatique, avec lequel des données de modèle sont générées par entraînement du modèle d'apprentissage automatique et qui comprend comme résultats de sortie les causes de défaut (24) et les premières ou deuxièmes probabilités de modèle (P1, P2), les probabilités de modèle (P1, P2) pour une cause de défaut (24) se basant sur une probabilité qui est générée par un algorithme du modèle d'apprentissage automatique (18, 18', 20) concerné.

2. Procédé selon la revendication 1, les probabilités de modèle (P1, P2, P3) étant pondérées différemment lors de la génération des probabilités finales (PE).

3. Procédé selon l'une des revendications précédentes, le premier modèle d'apprentissage automatique (18) se basant sur un arbre de décision (28).

4. Procédé selon l'une des revendications précédentes, le premier modèle d'apprentissage automatique (18') déterminant les premières probabilités de modèle (P1) à partir de l'au moins un code d'état (12) et d'au moins un paramètre d'environnement (36) du composant de véhicule qui s'est produit pendant le défaut.

5. Procédé selon l'une des revendications précédentes, comprenant en outre :
détermination de troisièmes probabilités de modèle (P3) pour les causes de défaut (24) du défaut avec un troisième modèle d'apprentissage automatique (22) à partir d'au moins un paramètre d'environnement (36) du composant de véhicule qui s'est produit pendant le défaut, les troisièmes probabilités de modèle (P3) étant déterminées à la place des deuxièmes probabilités de modèle (P2) ou en plus des deuxièmes probabilités de modèle (P2) ;
génération de probabilités finales (PE) pour les causes de défaut (24) à partir des premières et des troisièmes ou, en variante, à partir des premières, des deuxièmes et des troisièmes probabilités de modèle (P1, P2, P3).

6. Procédé selon la revendication 4 ou 5, comprenant en outre :
génération d'au moins un paramètre d'environnement (36) à partir de la description de défaut (14) textuelle.

7. Procédé selon l'une des revendications 4 à 6, comprenant en outre :
détermination d'une position de véhicule et/ou d'un moment de défaut à partir de la description de défaut (14) textuelle ;
indentification d'au moins un paramètre d'environnement (36) en se basant sur la position de véhicule et/ou le moment de défaut.

8. Procédé selon l'une des revendications 4 à 7, le troisième modèle d'apprentissage automatique (22) se basant sur un arbre de décision (42).

9. Procédé pour entraîner des modèles d'apprentissage automatique (18, 18', 20, 22) pour déterminer une cause de défaut (24) d'un défaut dans un composant de véhicule, le procédé comprenant :
détermination d'une cause de défaut (24) avec le procédé selon l'une des revendications précédentes ;
détermination d'une cause de défaut (24) réelle ;
entraînement de données de modèle (28, 34, 42) du premier modèle d'apprentissage automatique (18, 18'), du deuxième modèle d'apprentissage automatique (20) et/ou d'un troisième modèle d'apprentissage automatique (22) en se basant sur l'au moins un code d'état (12), la description de défaut (14) textuelle et/ou au moins un paramètre d'environnement (36) et la cause de défaut (24) réelle.

10. Procédé selon la revendication 9, une probabilité de modèle (P1, P2, P3) pour une cause de défaut (24) se basant sur une fréquence de la cause de défaut (24).

11. Procédé selon la revendication 10, une ou plusieurs causes de défaut (24) étant sélectionnées avec un algorithme du modèle d'apprentissage automatique (18, 18', 22) concerné et la probabilité de modèle (P1, P2, P3) pour la cause de défaut (24) étant la fréquence de la cause de défaut.

12. Arrangement (10) de détermination d'une cause de défaut (24) d'un défaut dans un composant de véhicule, l'arrangement (10) étant réalisé pour mettre en œuvre le procédé selon l'une des revendications 1 à 8.

13. Arrangement (10) selon la revendication précédente, un dispositif de détermination des probabilités de modèle (P1, P2, P3) au moyen des modèles d'apprentissage automatique (18, 18', 20, 22) et un dispositif de détermination des probabilités finales (PE) étant intégrés dans un arrangement (10) dans le véhicule (44).

14. Arrangement (10) selon l'une des deux revendications précédentes, un dispositif de détermination des probabilités de modèle (P1, P2, P3) au moyen des modèles d'apprentissage automatique (18, 18', 20, 22) et un dispositif de détermination des probabilités finales (PE) étant intégrés dans un arrangement (10) dans un environnement infonuagique (46) pris en charge en ligne.

15. Arrangement selon l'une des trois revendications précédentes, comprenant un dispositif d'évaluation (48), qui est conçu pour qu'un spécialiste effectue une évaluation des probabilités finales (PE), l'évaluation étant transmise dans les modèles d'apprentissage automatique et ceux-ci étant réadaptés.

16. Programme informatique qui, lorsqu'il est exécuté sur un processeur, met en œuvre le procédé selon l'une des revendications 1 à 11.

17. Support lisible par ordinateur, sur lequel est enregistré un programme informatique selon la revendication précédente.
